(19)

Europäisches Patentamt

European Patent Office

Office européen des brevets

(11) **EP 2 702 382 B1**

(12) **EUROPÄISCHE PATENTSCHRIFT**

(45) Veröffentlichungstag und Bekanntmachung des Hinweises auf die Patenterteilung:
**20.03.2019 Patentblatt 2019/12**

(21) Anmeldenummer: **12729835.4**

(22) Anmeldetag: **26.04.2012**

(51) Int Cl.:
*G01M 5/00* (2006.01)   *G01C 11/02* (2006.01)
*G05D 1/00* (2006.01)   *F03D 17/00* (2016.01)
*F03D 80/50* (2016.01)

(86) Internationale Anmeldenummer:
**PCT/AT2012/050056**

(87) Internationale Veröffentlichungsnummer:
**WO 2012/145780 (01.11.2012 Gazette 2012/44)**

(54) **VERFAHREN UND SYSTEM ZUM PRÜFEN EINER OBERFLÄCHE AUF MATERIALFEHLER**

METHOD AND SYSTEM FOR INSPECTING A SURFACE AREA FOR MATERIAL DEFECTS

PROCÉDÉ ET SYSTÈME POUR EXAMINER UNE SURFACE SOUS LE RAPPORT DES DÉFAUTS DE MATIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2011 DE 102011017564**

(43) Veröffentlichungstag der Anmeldung:
**05.03.2014 Patentblatt 2014/10**

(73) Patentinhaber: **Airbus Defence and Space GmbH 85521 Ottobrunn (DE)**

(72) Erfinder:
• **NADERHIRN, Michael**
  **A-4020 Linz (AT)**
• **LANGTHALER, Peter**
  **A-4020 Linz (AT)**

(74) Vertreter: **Westphal, Mussgnug & Partner Patentanwälte mbB**
  **Werinherstrasse 79**
  **81541 München (DE)**

(56) Entgegenhaltungen:
WO-A2-2011/064565      CN-A- 101 604 830
DE-A1-102005 002 278   DE-A1-102008 053 928
DE-B3-102010 046 493   JP-A- 11 132 962
JP-A- 2005 265 699     JP-A- 2008 247 293
US-A1- 2009 279 776    US-A1- 2010 103 260
US-A1- 2010 245 566    US-A1- 2011 090 110

• DATABASE INSPEC [Online] THE INSTITUTION OF ELECTRICAL ENGINEERS, STEVENAGE, GB; 2007, RUI LIU ET AL: "Real time fully automatic 3D-modelling of HRSC landscape data", XP002683176, Database accession no. 9702629 & 2007 URBAN REMOTE SENSING JOINT EVENT 11-13 APRIL 2007 PARIS, FRANCE, 11. April 2007 (2007-04-11), - 13. April 2007 (2007-04-13), Seiten 5-11, 2007 Urban Remote Sensing Joint Event IEEE Piscataway, NJ, USA ISBN: 1-4244-0711-7

EP 2 702 382 B1

**Beschreibung**

Die vorliegende Erfindung betrifft ein Verfahren und eine System zum automatisierten Prüfen einer Oberfläche auf Materialfehler.

Materialfehler können negative Auswirkungen auf die Stabilität von Bauteilen an Bauwerken, wie z.B. Brückenpfeiler oder Rotorblätter von Windturbinen, haben. Insbesondere können sich Materialfehler fortpflanzen und zu gravierenden statischen Beeinträchtigungen führen. Deshalb werden die Oberflächen solcher Bauwerke üblicherweise regelmäßigen Prüfungen, insbesondere Sichtprüfungen unterzogen. Bei schwer erreichbaren und/oder in großer Höhe befindlichen Oberflächen (wie z.B. Flügel von Offshore-Windkraftanlagen) ist eine Prüfung auf Materialfehler mit großem Aufwand verbunden, da beispielsweise Personen aus großer Höhe abgeseilt werden müssen, um die zu prüfenden Oberflächen zu erreichen und anschließend zu inspizieren. Hierbei ist besonders der Zeitaufwand, jedoch auch der Sicherheitsaspekt beachtlich.

Aus der Druckschrift JP 2005 265699 A sowie der CN 101 604 830 A sind beispielsweise Systeme zur Inspektion von Stromleitungen bekannt. Die DE 10 2005 002 278 A1 beschreibt ein unbemanntes Flugzeug zur Geländeüberwachung. Die US 2010/103260 A1 beschreibt ein Fluggerät zur Inspektion von Windkraftanlagen. Aus der DE 10 2008 053 928 A1 ist ebenfalls ein Verfahren zur Inspektion von Rotorblättern an Windkraftanlagen bekannt. Ein System zur Überprüfung des Korrosionszustands der Oberfläche von Bauwerken ist beispielsweise aus der JP 11 132962 A bekannt. Ein Fluggerät zur Inspektion von Objekten ist auch in der JP 2008 247293 A offenbart. Aus der US 2011/0 090 110 A1 ist eine Überwachung einer Windkraftanlage anhand eines auf einem Fluggerät montierten Radarsystems bekannt.

Es ist daher Aufgabe der vorliegenden Erfindung, ein Verfahren bzw. ein System zum Prüfen von Oberflächen auf Materialfehler zur Verfügung zu stellen, welches gegenüber dem Stand der Technik verbessert ist.

Diese Aufgabe wird durch ein Verfahren gemäß Anspruch 1 sowie durch ein System gemäß Anspruch 4 gelöst. Beispielhafte Ausgestaltungen und Weiterentwicklungen der Erfindung sind Gegenstand der abhängigen Ansprüche.

Im Folgenden wird ein Verfahren und ein Messsystem zum Prüfen einer Oberfläche auf Materialfehler mittels einer auf einem unbemannten und autonom navigierenden Fluggerät angeordneten Kameraanordnung beschrieben. Das Verfahren weist die folgenden Schritte auf: automatisches anfliegen der Oberfläche ausgehend von einem Startplatz, wobei Hindernisse durch Anwendung von Verfahren zum automatischen Erkennen von Hindernissen und Ausweichen umflogen werden können, kontinuierliches Messen einer Relativposition des Fluggeräts in Bezug auf die Oberfläche mit Hilfe eines Positionssensors, Aufnehmen einer Sequenz von Bildern der Oberfläche, wobei zwischen den einzelnen Bildern das Fluggerät entlang einer Flugbahn derart relativ zur Oberfläche bewegt wird, dass die Bilder der Sequenz in Überlappungsbereichen zumindest teilweise überlappende Bildausschnitte der Oberfläche aufweisen, und Zusammensetzen der Bilder der Sequenz zu einem Gesamtbild der Oberfläche, um eine Prüfung der Oberfläche auf Defekte und eine Lokalisierung von Defekten anhand des Gesamtbildes zu ermöglichen, wobei die Relativposition des Fluggeräts kontinuierlich geregelt wird, sodass das Fluggerät einen vordefinierten Abstand und eine vorgegebene Orientierung relativ zur Oberfläche einhält und die Flugbahn im Wesentlichen parallel zur Oberfläche verläuft.

Das System weist ein Fluggerät mit einer Steuereinheit auf, die in einem Navigationsmodus dazu ausgebildet ist, ausgehend von einem Startplatz automatisiert die Oberfläche anzufliegen und während des Flugs automatisiert Hindernisse zu erkennen und solchen auszuweichen, wofür das Fluggerät eine Kameraanordnung und einen Positionssensor umfasst. Der Positionssensor ist dazu ausgebildet, nach dem Anfliegen der Oberfläche die Relativposition des Fluggeräts in Bezug auf die Oberfläche zu ermitteln, und die Steuereinheit ist in einem Inspektionsmodus dazu ausgebildet, das Fluggerät automatisch entlang einer Flugbahn relativ zur Oberfläche zu bewegen und währenddessen mit Hilfe der Kameraanordnung eine Sequenz von sich teilweise überlappenden Bildern der Oberfläche aufzunehmen sowie die zu jedem Bild die korrespondierende Relativposition zu messen, wobei die Bilder zu einem Gesamtbild der Oberfläche zusammensetzbar sind, um eine Prüfung der Oberfläche auf Defekte und eine Lokalisierung von Defekten anhand des Gesamtbildes zu ermöglichen. Das System zeichnet sich dadurch aus, dass es die Relativposition des Fluggeräts kontinuierlich regelt, sodass das Fluggerät einen vordefinierten Abstand und eine vorgegebene Orientierung relativ zur Oberfläche einhält.

Figur 1 in einer Vorderansicht eine Oberfläche mit einem Materialfehler und sich teilweise überlappende Bilder der Oberfläche entlang einer Flugbahn des Fluggerätes,

Figur 2 in einer Seitenansicht eine Oberfläche und das Fluggerät mit einer Kameraanordnung,

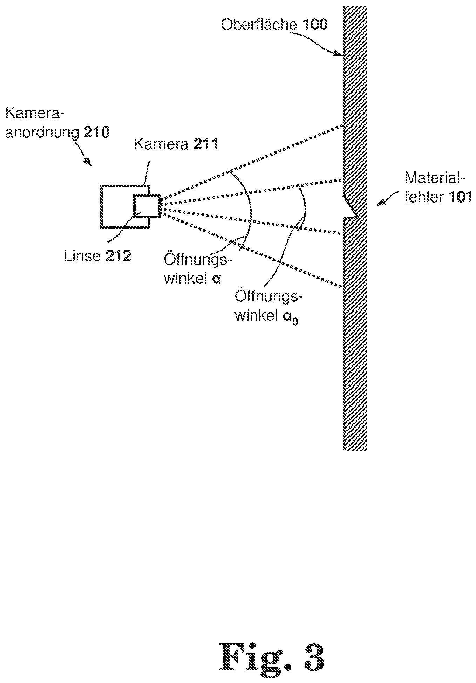

Figur 3 in einer Seitenansicht eine Oberfläche und die Kameraanordnung mit verschiedenen Öffnungswinkeln,

Figur 4 in einem Blockschaltbild das Fluggerät und eine Steuereinheit und

Figur 5 eine Windkraftturbine mit Rotorblättern und dem Fluggerät.

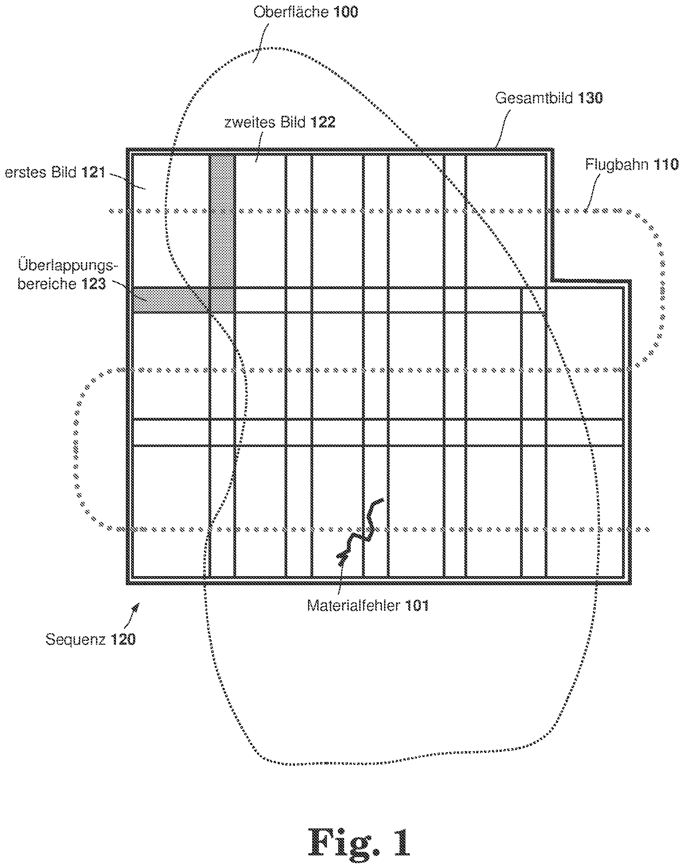

In Figur 1 ist in einer Vorderansicht eine beliebige Oberfläche 100 dargestellt. Es handelt sich bei der Oberfläche 100 z.B. um eine schwer erreichbare, beispielsweise in großer Höhe befindliche Oberfläche. Diese Oberfläche 100 kann Materialfehler 101 aufweisen. Der in Figur 1 dargestellte Materialfehler 101 kann beispielsweise ein Riss sein. Erfindungsgemäß wird von der zu prüfenden Oberfläche 100 wenigstens ein erstes Bild 121 aufgenommen. In der Praxis wird es jedoch häufig vorkommen, dass die Oberfläche 100 zu groß ist, als dass sie durch ein einziges Bild 121 mit ausreichender Bildqualität erfasst werden könnte, insbesondere dann, wenn das Bild von einer Kamera mit Teleobjektiv aufgenommen wird. Deshalb kann wenigstens ein zweites Bild 122 oder eine Sequenz 120 von Bildern aufgenommen werden, die jeweils einzelne Oberflächenabschnitte der Oberfläche 100 darstellen.

Ist wenigstens ein zweites Bild 122, d.h. eine Sequenz 120 von Bildern notwendig, so können die einzelnen Bilder 121, 122 der Sequenz 120 in einer Weise aufgenommen werden, dass sich benachbarte Bilder in Überlappungsbereichen 123 wenigstens teilweise überlappen. Dadurch können die einzelnen Bilder 121, 122 der Sequenz 120 mittels Bildverarbeitung praktisch "nahtlos" zu einem Gesamtbild 130 zusammengesetzt werden. Hierzu können beispielsweise an sich bekannte Image-Stitching-Methoden oder ein anderes geeignetes Bildverarbeitungsverfahren angewendet werden. Dabei ist auch eine Umrechnung der einzelnen Bilder in sogenannte Orthofotos möglich. Unter einem Orthofoto wird eine verzerrungsfreie und maßstabsgetreue Abbildung der Oberfläche verstanden, die durch photogrammetrische Verfahren aus den Bildern der Sequenz 120 abgeleitet wird.

Zur Erstellung des wenigstens einen Bildes 121 oder der Sequenz 120 von Bildern wird ein unbemanntes und autonom navigierendes Fluggerät 200 (englisch "autonomous UAV" bzw. "autonomous unmanned aerial vehicle", auch als "Drohne" bezeichnet) mit einer Kameraanordnung 210 verwendet werden. Das Fluggerät 200 fliegt beispielsweise entlang einer Flugbahn 110. Diese Flugbahn 110 wird so gewählt, dass die Kameraanordnung 210 des Fluggeräts 200 eine Sequenz 120 von Bildern aufnehmen kann, so dass sich zwischen den Einzelbildern 121, 122 Überlappungsbereiche 123 ergeben, um ein Gesamtbild 130 zu erzielen.

Das Fluggerät 200 kann ein sogenanntes "Sense-and-Avoid-System" (auch "See-andAvoid-System") zur Erkennung von Hindernissen und zum automatisierten Ausweichen aufweisen. Derartige Systeme können über eine mindestens eine Kamera aufweisende Kameraanordnung 210 sowie über Abstandssensoren (z. B. Radarsensor oder Laserscanner) verfügen. Ein Sense-and-Avoid-System ist z.B. in der Publikation WO/2010/007115 beschrieben. Inbesondere bei der Inspektion einer Windkraftanlage in einem Windpark mit vielen Windkraftanlagen hat die Verwendung eines autonom navigierenden UAVs mit Sense-and-Avoid-System signifikannte Vorteile, da Kollisionen mit in der Flugbahn liegenden Windkraftanlagen praktisch automatisch vermieden wird. Als UAVs eignen sich besonders Helikopter, insbesondere Quadrotor-Helikopter.

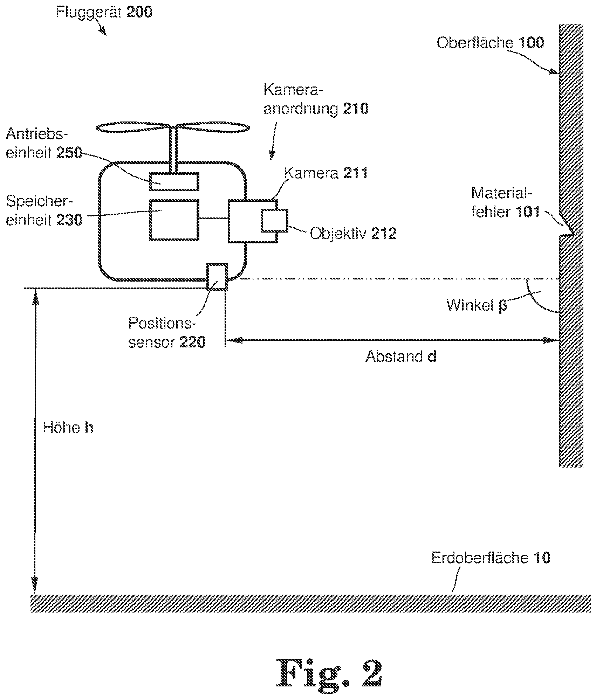

In Figur 2 ist eine Seitenansicht der Oberfläche 100 dargestellt. Der Materialfehler 101 ist ebenfalls skizziert. Weiterhin ist schematisch das Fluggerät 200 gezeigt, wobei sich das Fluggerät 200 in der Höhe h über dem Erdoberfläche 10 (bzw. Wasseroberfläche) und im Abstand d von der zu inspizierenden Oberfläche 100 befindet. Das Fluggerät 200 kann dabei beispielsweise in einem Schwebezustand einen festen Winkel β (z.B. 90°) sowie einen festen (vorgebbaren) Abstand d zur Oberfläche 200 einhalten. Für die weitere Bildverarbeitung (z. B. das oben erwähnte Image-Stitching) kann es von Vorteil sein, wenn die Bilder der Sequenz annähernd aus der gleichen Perspektive aufgenommen werden.

Das Fluggerät 200 kann eine Antriebseinheit 250, eine Speichereinheit 230, zumindest einen Positionssensor 220 sowie eine Kameraanordnung 210 aufweisen. Das Fluggerät 200 kann so ausgeführt sein, das es in der Lage ist, gegenüber der Erdoberfläche 10 und der Oberfläche 100 in einem Schwebezustand zu verharren. Beispielsweise kann das Fluggerät 200 ein VTOL-Fluggerät (engl. VTOL: vertical take-off and landing). VTOL-Fluggeräte sind in der Lage senkrecht zu starten, zu landen sowie zu schweben, d.h. in einer bestimmten Position in der Luft zu verharren. Die maximalen Außenabmessungen eines solchen Fluggeräts kann z.B. im Bereich von rund 2,5 m liegen. Solche Fluggeräte können beispielsweise eine Flugbahn 110 über die Oberfläche 100 hinweg durchfahren, wobei die Flugbahn in einem vorgegebenen definierten Abstand d zur Oberfläche 100 verläuft und das Fluggerät einen festen Winkel zur Oberfläche 100 einhält. Die Kameraanordnung 210 des Fluggeräts dient dazu, wenigstens ein Bild 121, 122 oder eine Sequenz 120 von Bildern der Oberfläche 100 aufzunehmen. Diese Bilder können in der Speichereinheit 230 abgelegt werden. Der Positionssensor 220 oder mehrere Positionssensoren können dafür vorgesehen sein, die Höhe h, die Entfernung d sowie den Winkel β kontinuierlich beispielsweise in vorgegeben Taktzyklen zu ermitteln. Dadurch kann die Relativposition und die Orientierung des Fluggeräts 200 relativ zur Oberfläche 100 kontinuierlich ermittelt und bei Bedarf geregelt werden. Bei der Ermittlung der Relativposition des Fluggeräts 200 kann die Höhe h und/oder der Abstand d und/oder der Elevationswinkel β und/oder der Azimutwinkel oder alle diese Größen berücksichtigt werden. Es ist auch denkbar, weitere nicht aufgeführte Hilfsgrößen, beispielsweise die Windgeschwindigkeit, bei der Bestimmung der Relativposition mit einzubeziehen. Häufig ist es Wünschenswert den Effekt der Windgeschwindigkeit auf das Fluggerät regelungstechnisch zu kompensieren. Aus Gründen der Energieeffizienz kann das Fluggerät immer in Windrichtung gedreht werden.

Der Positionssensor 220 kann wenigstens einen Laserscanner zur Abtastung der Oberfläche 100 aufweisen, um den Abstand d zur Oberfläche 100 (kontinuierlich) zu messen. Alternativ sind auch Radarsensoren einsetzbar. Auch GPS-Sensoren (z.B. in Verbindung mit Gyrosensoren) können zur Positionsmessung verwendet werden.

Erfindungsgemäß kann vorgesehen werden, dass die Relativposition des Fluggeräts 200 bzw. der darin verankerten Kameraanordnung 210 zur Oberfläche kontinuierlich gemessen und geregelt wird. Gemäß einem Ausführungsbeispiel hält das Fluggerät dabei einen vordefinierten Abstand d (optional auch und feste Winkel) zur Oberfläche 100 ein. Dadurch ist es möglich, auch von Oberflächen, die ein Profil aufweisen, wie beispielsweise die Rotorblätter einer Windkraftturbine, ein kontinuierliches Gesamtbild 130 zu erzeugen; insbesondere dann, wenn eine Sequenz 120 von Bildern aufgenommen wird. Die Positionierung des Fluggeräts 200 relativ zur untersuchenden Oberfläche kann beispielsweise durch einen bordeigenen Windprädiktor (Windrichtung und Windstärke) unterstützt werden. Durch einen Windprädiktor kann die jeweilige Windstärke bei der Positionierung des Fluggeräts berücksichtigt werden. Beispielsweise kann das Fluggerät 200 so navigiert werden, dass es sich in Windrichtung ausrichtet, wodurch der Energieverbrauch optimiert wird.

Es ist jedoch nicht zwingend erforderlich, dass das Fluggerät einen vordefinierten Abstand d und/oder einen festen Winkel β zur Oberfläche 100 einhält. Ist das nicht der Fall, so müssen die Bilder der aufgenommene Sequenz durch Bildverarbeitung skaliert und entzerrt werden. Beispielsweise kommt eine Umrechnung der Bilder der Sequenz in Orthofotos in Betracht. Da die Relativposition des Fluggerätes 200 für jedes aufgenommene Einzelbild der Sequenz bekannt ist, ist auch eine 3D-Rekonstruktion der Oberfläche möglich.

Das wenigstens eine Bild 121 der Oberfläche 100 kann automatisiert auf Defekte in der Oberfläche 100 geprüft werden, um Materialfehler 101 der Oberfläche zu erkennen und zu lokalisieren. Um dies zu realisieren, weist die Kameraanordnung 210 des Fluggeräts 200 zumindest eine Kamera 211 mit wenigstens einem Objektiv 212 auf. Gemäß einer Ausführungsform kann die Kamera 211, die Kameraanordnung 210, das Objektiv 212 oder können alle drei dieser Komponenten elektrisch verstellbar sein. Hierzu können geeignete Verstellmittel wie Elektromotoren vorgesehen sein. Insbesondere kann das Objektiv 212 so verstellbar ausgeführt sein, dass der Öffnungswinkel α des Objektivs 212 variiert werden kann (Zoom-Objektiv). Die Auswertung der Bilder oder der Sequenz von Bildern kann on- oder offline erfolgen. Beispielsweise kann eine geeignete und bekannte Bildverarbeitungssoftware eingesetzt werden. Alternativ kann die Auswertung aber auch durch visuelle Inspektion der Bilder oder der Sequenz von Bildern ohne Computerunterstützung erfolgen.

Ein variierbarer Öffnungswinkel α des Objektivs 212 ist erfindungsgemäß vorgesehen, um einerseits sich in einem Überlappungsbereich 123 überlappende Bilder 121, 122 (oder eine entsprechende Sequenz 120 von Bildern) aufzunehmen und andererseits, um den Öffnungswinkel abhängig von der Relativposition des Fluggeräts 200 zur Oberfläche 100 (d.h. Abhängig vom Abstand) so zu wählen, dass ein Materialfehler 101, beispielsweise ein Riss oder ein Loch, erkannt werden kann. Näherungsweise ergibt sich der zur Erkennung eines Materialfehlers 101 notwendige Öffnungswinkel beispielsweise aus

$$\alpha_0 = \arctan\left(\frac{n \cdot s}{2 \cdot a \cdot d}\right) \quad \text{(Gleichung 1)}$$

wobei

n: die Pixelanzahl in einer Koordinatenrichtung der Kamerafläche,

s: die Größe des zu erkennenden Materialfehlers, insbesondere die Breite eines Risses,

a: die Pixelanzahl auf der der Materialfehler, insbesondere ein Riss, abgebildet werden soll und

d: der Abstand des Fluggerätes bzw. der Kamera (-anordnung) zur Oberfläche.

Die Gleichung 1 ergibt sich aus strahlengeometrischen Betrachtungen. Die Pixelanzahl a auf der der Materialfehler 101 abgebildet werden soll kann dabei beispielsweise zu a > 2 gewählt werden, da es vorteilhaft ist, den Materialfehler 101 auf wenigstens zwei Pixel abzubilden.

Wie erwähnt kommt als Fluggerät insbesondere ein autonom navigierendes UAV in betracht. Gemäß einem Beispiel der Erfindung hat das UAV ein Sense-and-Avoid-System zum automatisierten Erkennen von Hindernissen und Ausweichen. Ein derartiges Sense-and-Avoid-System umfasst zur Navigation eine Kameraanordnung und einen Abstandssensor. Die Kameraanordnung kann, je nach Betriebsmodus, einerseits zur Abtastung der zu untersuchenden Oberfläche (Fluggerät im "Inspektionsmodus") dienen, andererseits zum Navigieren des Fluggeräts, um die Oberfläche aus größerer Entfernung anzufliegen (Navigationsmodus). Im Navigationsmodus (auch Sense-and-Avoid-Modus) wird die Kameraanordnung 210 insbesondere dazu verwendet, Hindernisse auf der Flugbahn des Fluggeräts zu erkennen, denen dann nach bestimmten vordefinierten Algorithmen automatisiert ausgewichen werden kann. Beispielsweise kann auf diese Weise beim Durchfliegen eines Windparks Windkraftanlagen (die nicht inspiziert werden sollen) oder auch Schiffen, die in der direkten Flugbahn liegen, automatisiert und autonom ausgewichen werden. Hat das Fluggerät 200 die zu untersuchende Oberfläche (z.B. den Rotor der zu inspizierenden Windkraftanlage) erreicht, so wird der Betriebsmodus vom Navigationsmodus in einen Inspektionsmodus gewechselt, bei dem mit Hilfe des Fluggeräts wie vorangehend beschrieben Materialfehler an der zu untersuchenden Oberfläche erkannt werden können. Die Kameraanordnung 210 des Fluggerätes 200 kann dabei mehrere entlang eines Kreisbogens angeordnete Einzelkameras aufweisen, die ein großes Sichtfeld von z.B. 220° abdecken. Im Navigationsmodus ist ein großes Sichtfeld wünschenswert. Im Inspektionsmodus kann z.B. eine Kamera des Kameraanordnung zur Aufnahme der oben genannten Bildsequenz der zu inspizierenden Oberfläche verwendet werden.

Die Kamera 211 der Kameraanordnung 210 kann beispielsweise als elektro-optische (EO) Kamera, als Nahinfrarotkamera (NIR) oder als Infrarotkamera (IR) ausgeführt werden. Es ist auch denkbar mehrere dieser Kameratypen in der Kameraanordnung 211 anzuordnen. Darüber hinaus sind auch beliebige andere geeignete Kameratypen verwendbar.

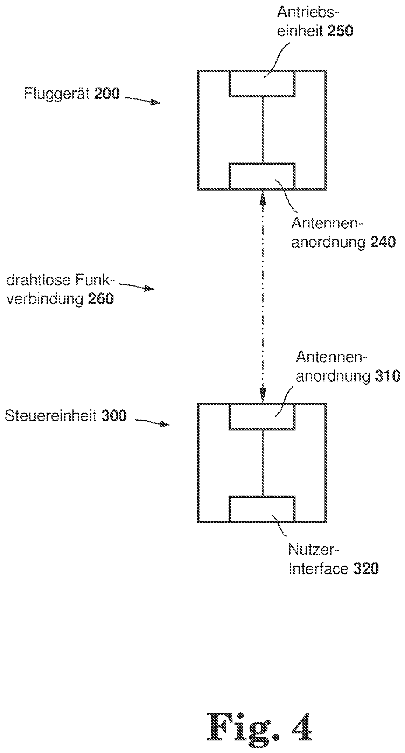

In Figur 4 ist schematisch in einem Blockschaltbild ein Fluggerät 200 und eine zugehörige Steuereinheit 300 gezeigt. Das Fluggerät 200 kann von einem Nutzer über eine Steuereinheit 300 gesteuert werden. Die Steuereinheit weist im Wesentlichen ein Nutzerinterface 320 auf, über das der Nutzer manuell Steuersignale zur Steuerung des Fluggeräts 200 bewirken kann. Die Steuersignale können gemäß einer Ausführungsform mittels einer Antennenanordnung 310 in der Steuereinheit 300 über eine drahtlose Funkverbindung 260 an eine Antennenanordnung 240 in dem Fluggerät 200 an selbiges übertragen werden. Die Antennenanordnung 240 des Fluggeräts 200 kann mit der Antriebseinheit 250 verbunden sein. Die Antriebseinheit kann dazu ausgebildet sein, das Fluggerät 200 schwebend in einer bestimmten Position zu halten und die Steuersignale aus der Antennenanordnung 240 zu empfangen, zu verarbeiten und entsprechend den Wünschen des Nutzers eine Flugroute 110 abzufliegen.

Gemäß dem oben beschriebenen Verfahren ergibt sich, dass beim Inspizieren der Oberfläche 100 die Steuerung des Fluggeräts 200 auf ein zweidimensionales Problem reduziert wird, da der Abstand d zur Oberfläche 100 konstant geregelt wird. Der Nutzer kann auf diese Weise lediglich die Position in einer sich im Abstand d parallel zu der Oberfläche 100 befindlichen Ebene steuern. Es ist darüber hinaus selbstverständlich denkbar, dass der Nutzer den Abstand manuell ändert, indem beispielsweise die Regelung ausgeschaltet wird.

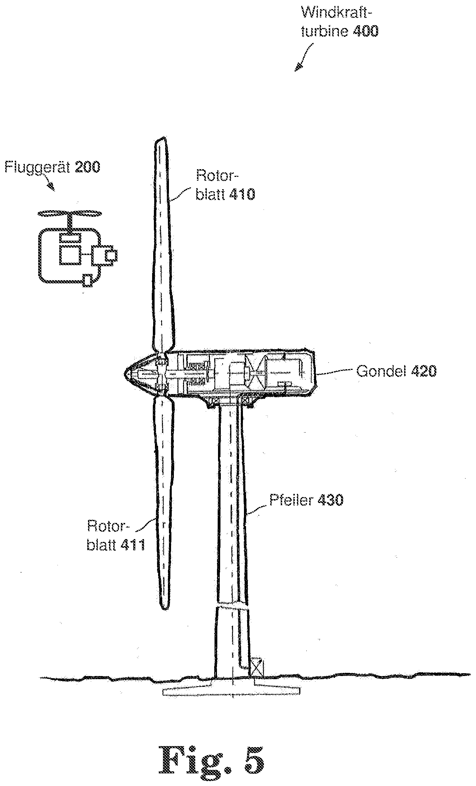

In Figur 5 ist eine Windkraftturbine 400 dargestellt. Solche Windkraftturbinen 400 werden beispielsweise zunehmend bei der Stromerzeugung eingesetzt. Eine Windkraftturbine besteht im Wesentlichen aus einem Pfeiler 430 auf dem eine Gondel 420 angeordnet ist. In der Gondel 420 befindet sich beispielsweise der Triebstrang (insbesondere Wellen, Getriebe, Generator) der Turbine. An der Gondel sind Rotorblätter 410, 411 angeordnet. Üblicherweise weist eine Windkraftturbine 400 drei um 120° versetzte Rotorblätter auf. Windkraftturbinen zur Stromerzeugung können beispielsweise Rotordurchmesser im Bereich von 130m aufweisen. Der Pfeiler 430 kann damit beispielsweise Höhen von etwa 100m erreichen. Damit befinden sich die Oberflächen 100 der Rotorblätter 410, 411, der Gondel 420 sowie des Pfeilers 430 in beträchtlicher Höhe (bis über 150 m über der Erd- bzw. Wasseroberfläche). Insbesondere Rotorblätter 410, 411 sind während des Betriebs starken mechanischen Belastungen ausgesetzt und müssen daher regelmäßig überprüft werden. Gerade zur Inspektion von Windkraftturbinen 400 ist das erfindungsgemäße Verfahrens sehr gut geeignet. Dadurch ist es nicht mehr notwendig, dass eine Person sich an zur Überprüfung der Oberflächen 100 auf Materialfehler 101 in große Höhen begibt. Insbesondere bei Offshore-Windkraftanlagen kann die Inspektion automatisch mit Hilfe eines UAVs durchgeführt werden und es müssen keine Menschen mehr zur Windkraftanlage im Meer befördert werden.

Das vorgeschlagene erfindungsgemäße Verfahren ist Oberflächenprüfung an Rotorblättern aber auch an Gebäuden oder sonstigen schwer erreichbaren Oberflächen vorteilhaft einsetzbar. Fluggeräte, die sich im unkontrollierten Luftraum bewegen sind in zahlreichen Ländern nicht oder nur unter eingeschränkten Voraussetzungen zertifizierungspflichtig. Der kontrollierte Luftraum beginnt ab einer gesetzlich definierten Mindestflughöhe (in Europa h=150m). "Gewöhnliche" Fluggeräte, insbesondere Flugzeuge, dürfen aus Sicherheitsgründen eine Flughöhe von h=150m nicht unterschreiten (ausgenommen Start und Landung).

So verbleibt für das erfindungsgemäße Fluggerät 200 üblicherweise lediglich ein Flugkorridor zwischen dem Erdboden und einer Flughöhe h=150m. Im Großstadtbereich mit entsprechend hohen Gebäuden oder in Windparks, insbesondere Offshore-Windparks, kann das Fluggerät 200 daher Hindernisse in der Regel nicht überfliegen, sondern muss vielmehr den Hindernissen auf geeignete Weise ausweichen. Weitere Hindernisse, die beispielsweise auf offener See in die Flugbahn des Fluggeräts geraten können, sind Containerschiffe, die bis zu m aus der Wasseroberfläche ragen können. Um diesen Hindernissen auszuweichen kann das Fluggerät 200 im vorangehend erläuterten NAvigations-Modus betrieben werden, in dem Hindernisse, beispielsweise Windkraftturbinen (automatisiert) erkannt und umflogen werden können. So bietet die Anwendung des erfindungsgemäßen Verfahrens insbesondere den Vorteil, dass nicht für den allgemeinen Flugbetrieb zertifizierte Fluggeräte verwendet werden können.

**Patentansprüche**

1. Verfahren zum Prüfen einer Oberfläche (100) mit bekannter Position auf Materialfehler (101) mittels einer auf einem unbemannten und autonom navigierenden Fluggerät (200) angeordneten Kameraanordnung (210), das aufweist:

automatisches anfliegen der Oberfläche (100) ausgehend von einem Startplatz, wobei Hindernisse durch Anwendung von Verfahren zum automatischen Erkennen von Hindernissen und Ausweichen umflogen werden können; kontinuierliches Messen einer Relativposition des Fluggeräts (200) in Bezug auf die Oberfläche (100) mit Hilfe eines Positionssensors (220); Aufnehmen einer Sequenz (120) von Bildern (121, 122) der Oberfläche (100), wobei zwischen den einzelnen Bildern (121, 122) das Fluggerät (100) entlang einer Flugbahn (110) derart relativ zur Oberfläche (100) bewegt wird, dass die Bilder (121, 122) der Sequenz (120) in Überlappungsbereichen (123) zumindest teilweise überlappende Bildausschnitte der Oberfläche (100) aufweisen; und Zusammensetzen der Bilder (121, 122) der Sequenz (120) zu einem Gesamtbild (130) der Oberfläche (100), um eine Prüfung der Oberfläche (100) auf Defekte und eine Lokalisierung von Defekten anhand des Gesamtbildes (130) zu ermöglichen, das Verfahren ist **dadurch gekennzeichnet, dass**

die Relativposition des Fluggeräts (200) kontinuierlich geregelt wird, sodass das Fluggerät (200) einen vordefinierten Abstand (d) und eine vorgegebene Orientierung relativ zur Oberfläche (100) einhält und die Flugbahn im Wesentlichen parallel zur Oberfläche (100) verläuft.

2. Verfahren gemäß Anspruch 1, bei dem sich das Fluggerät ein Sense-and-Avoid-System zum automatischen Erkennen von Hindernissen und zum automatisierten Ausweichen aufweist,

wobei das Sense-and-Avoid-System anfangs sich in einem Navigationsmodus befindet, in dem automatisiert die Oberfläche angeflogen oder zum Startplatz zurückgeflogen wird, und wobei das Sense-and-Avoid-System nach dem Anfliegen der Oberfläche (100) in einen Inspektionsmodus umgeschalten wird, in dem Bilder der Oberfläche aufgenommen werden können.

3. Verfahren gemäß einem der vorherigen Ansprüche, bei dem wenigstens zwei in der Kameraanordnung (210) angeordnete Kameras die Sequenz (120) von Bildern (121, 122) der Oberfläche (100) aufnehmen.

4. System zum Prüfen einer Oberfläche (100) mit bekannter Position auf Materialfehler (101); das System weist auf:

ein Fluggerät (200) mit einer Steuereinheit, die in einem Navigationsmodus dazu ausgebildet ist, ausgehend von einem Startplatz automatisiert die Oberfläche (100) anzufliegen und während des Flugs automatisiert Hindernisse zu erkennen und solchen auszuweichen, wofür das Fluggerät eine Kameraanordnung (210) und einen Positionssensor umfasst,

wobei der Positionssensor (220), dazu ausgebildet ist, nach dem Anfliegen der Oberfläche (100) die Relativposition des Fluggeräts (200) in Bezug auf die Oberfläche (100) zu ermitteln, und

wobei die Steuereinheit (300), in einem Inspektionsmodus dazu ausgebildet ist, das Fluggerät (200) automatisch entlang einer Flugbahn relativ zur Oberfläche (100) zu bewegen und währenddessen mit Hilfe der Kameraanordnung eine Sequenz (120) von sich teilweise überlappenden Bildern (121, 122) der Oberfläche (100) aufzunehmen sowie die zu jedem Bild die korrespondierende Relativposition zu messen, wobei die Bilder zu einem Gesamtbild der Oberfläche zusammensetzbar sind, um eine Prüfung der Oberfläche (100) auf Defekte und eine Lokalisierung von Defekten anhand des Gesamtbildes (130) zu ermöglichen, das System ist **dadurch gekennzeichnet, dass**

es die Relativposition des Fluggeräts (200) kontinuierlich regelt, sodass das Fluggerät (200) einen vordefinierten Abstand (d) und eine vorgegebene Orientierung relativ zur Oberfläche (100) einhält.

5. System, gemäß Anspruch 4, das weiter aufweist:

einer in dem Fluggerät (200) angeordnete Speichereinheit (230), die dazu ausgebildet ist, von der Kameraanordnung (210) aufgenommene Bilder (121, 122) abzuspeichern, oder ein in dem Fluggerät (200) angeordnetes Funkmodul, das dazu ausgebildet ist, von der Kameraanordnung (210) aufgenommene Bilder (121, 122) an einen Funkempfänger zu senden.

6. Verfahren gemäß Anspruch 1, wobei die Oberfläche (100) die Oberfläche eines Rotorblattes einer Windkraftanlage mit bekannter Position ist.

7. Das Verfahren gemäß Anspruch 6, bei dem nach der Aufnahme der Sequenz von Bildern zum Startplatz zurückgeflogen oder ein weiteres Rotorblatt angeflogen wird, um eine weitere Sequenz von Bildern aufzunehmen.

**Claims**

1. Method for inspecting a surface area (100) with a known position for material defects (101) using a camera configuration (210) arranged on an unmanned and autonomously navigating aircraft (200), comprising:

automatically approaching the surface area (100) starting from a take-off site, wherein obstacles can be avoided by using methods for automatically detecting obstacles and avoiding them;
continuously measuring a relative position of the aircraft (200) with respect to the surface area (100) with the help of a position sensor (220);
recording a sequence (120) of images (121, 122) of the surface area (100), wherein between the individual images (121, 122) the aircraft (100) is moved along a flight path (110) in relation to the surface area (100) in such a way that the images (121, 122) of the sequence (120) have at least partially overlapping image details of the surface area (100) in overlap regions (123) ;
compiling the images (121, 122) of the sequence (120) to form an overall image (130) of the surface area (100), in order to allow for an inspection of the surface area (100) for defects and a localization of defects using the overall image (130), the method is **characterized in that** the relative position of the aircraft (200) is regulated continuously so that the aircraft (200) maintains a predefined distance (d) and a predefined orientation in relation to the surface area (100), and the flight path runs essentially parallel to the surface area (100).

2. Method according to claim 1, wherein the aircraft comprises a sense-and-avoid system for the automatic detection of obstacles and their automated avoidance,

wherein the sense-and-avoid system is initially in a navigation mode in which automatically the surface area is approached or one flies back to the take-off site, and
wherein, after approaching the surface area (100), the sense-and-avoid system is switched to an inspection mode in which images of the surface area can be recorded.

3. Method according to one of the previous claims, wherein at least two cameras arranged in the camera configuration (210) record the sequence (120) of images (121, 122) of the surface area (100).

4. System for inspecting a surface area (100) with a known position for material defects (101), wherein the system comprises:

an aircraft (200) with a control unit configured in a navigation mode to approach automatically the surface area (100) starting from a take-off site and to automatically detect obstacles during the flight and to avoid the obstacles, for which the aircraft comprises a camera configuration (210) and a position sensor,

wherein the position sensor (220) is configured to determine the relative position of the aircraft (200) with respect to the surface area (100) after approaching the surface area (100), and
wherein the control unit (300) is configured in an inspection mode to automatically move the aircraft (200) along a flight path in relation to the surface area (100) and to record meanwhile a sequence (120) of partially overlapping images (121, 122) of the surface area (100) with the help of the camera configuration and to measure the relative position corresponding to each image, wherein the images can be assembled to form an overall image of the surface area in order to permit an inspection of the surface area (100) for defects and a localization of defects on the basis of the overall image (130), the system is **characterized in that**

it regulates continuously the relative position of the aircraft (200) so that the aircraft (200) maintains a predefined distance (d) and a predefined orientation in relation to the surface area (100).

5. System according to claim 4, further comprising:

a memory unit (230) arranged in the aircraft (200) and configured to store images (121, 122) recorded by the camera configuration (210); or a radio module arranged in the aircraft (200) that is configured to transmit images (121, 122) recorded by the camera configuration (210) to a radio receiver.

6. Method according to claim 1, wherein the surface area (100) is the surface area of a rotor blade of a wind turbine with a known position.

7. Method according to claim 6, wherein after recording the sequence of images, one flies back to the take-off site or another rotor blade is approached to record another sequence of images.

## Revendications

1. Procédé pour inspecter une surface (100) ayant une position connue sous le rapport des défauts matériels (101) en utilisant un ensemble de caméra (210) monté sur un engin volant (200) sans pilote et navigant de manière autonome, comprenant :

   l'approche automatique de la surface (100) à partir d'un site de décollage, des obstacles pouvant être contournés en utilisant des méthodes pour identifier les obstacles et les éviter automatiquement ;
   la mesure continue d'une position relative de l'engin volant (200) par rapport à la surface (100) à l'aide d'un capteur de position (220) ;
   la capture d'une séquence (120) d'images (121, 122) de la surface (100), l'engin volant (200) étant déplacé entre les différentes images (121, 122) le long d'une trajectoire de vol (110) relativement à la surface (100) de manière à ce que les images (121, 122) de la séquence (120) comprennent des fragments d'image de la surface (100) se recouvrant au moins en partie dans des zones de recouvrement (123) ; et
   la composition des images (121, 122) de la séquence (120) pour obtenir une image globale (130) de la surface (100) afin de permettre une inspection de la surface (100) sous le rapport des défauts et une localisation des défauts à l'aide de l'image globale (130), le procédé est **caractérisé en ce que**
   la position relative de l'engin volant (200) est régulée de manière continue de manière à ce que l'engin volant (200) maintienne une distance prédéfinie (d) et une orientation prédéfinie par rapport à la surface (100) et que la trajectoire de vol soit essentiellement parallèle à la surface (100).

2. Procédé selon la revendication 1, dans lequel l'engin volant comprend un système « détecter et éviter » conçu pour détecter des obstacles automatiquement et les éviter de manière automatisée,

   dans lequel le système « détecter et éviter » se trouve au départ dans un mode de navigation, dans lequel la surface est approchée de manière automatisée ou dans lequel on revient au site de décollage, et
   dans lequel le système « détecter et éviter », après l'approche de la surface (100), passe dans un mode d'inspection dans lequel il est possible de prendre des images de la surface.

3. Procédé selon l'une des revendications précédentes, dans lequel au moins deux caméras arrangées dans l'ensemble de caméra (210) capturent la séquence (120) d'images (121, 122) de la surface (100).

4. Système destiné à inspecter une surface (100) ayant une position connue sous le rapport des défauts matériels (101) ; le système comprend :

   un engin volant (200) avec une unité de commande qui est conçue dans un mode de navigation pour approcher automatique la surface (100) à partir d'un site de décollage et pour identifier de manière automatisée des obstacles au cours du vol et pour les éviter, ce pour quoi l'engin volant comprend un ensemble de caméra (210) et un capteur de position ;

   le capteur de position (220) étant conçu pour calculer, après avoir approché la surface (100), la position relative de l'engin volant (200) par rapport à la surface (100), et l'unité de commande (300) étant conçue dans un mode d'inspection pour déplacer l'engin volant (200) automatiquement le long d'une trajectoire de vol relativement à la surface (100) et pour capturer pendant ce temps à l'aide de l'ensemble de caméra une séquence (120) d'images (121, 122) de la surface (100) se recoupant en partie ainsi que pour mesurer la position relative correspondant à chaque image, les images pouvant être composées pour former une image globale de la surface afin de permettre une inspection de la surface (100) sous le rapport des défauts et une localisation des défauts à l'aide de l'image globale (130), le système est **caractérisé en ce que**

   la position relative de l'engin volant (200) est régulée de manière continue de manière à ce que l'engin volant (200) maintienne une distance prédéfinie (d) et une orientation prédéfinie par rapport à la surface (100).

5. Système selon la revendication 4, qui comprend en outre :

   une unité de mémoire (230) arrangée dans l'engin volant (200) et conçue pour stocker des images (121, 122) prises par l'ensemble de caméra (210), ou
   un module radio arrangé dans l'engin volant (200) et conçu pour envoyer des images (121, 122) prises par l'ensemble de caméra (210) à un récepteur radio.

6. Procédé selon la revendication 1, dans lequel la surface (100) est la surface d'une pale de rotor d'une éolienne ayant une position connue.

**7.** Procédé selon la revendication 6, dans lequel après la capture de la séquence des images on retourne au site de décollage ou on approche une autre pale de rotor pour capturer une autre séquence d'images.

Oberfläche **100**

Gesamtbild **130**

zweites Bild **122**

erstes Bild **121**

Flugbahn **110**

Überlappungsbereiche **123**

Sequenz **120**

Materialfehler **101**

**Fig. 1**

**Fig. 2**

**Fig. 3**

Antriebseinheit **250**

Fluggerät **200** ⟶

Antennenanordnung **240**

drahtlose Funkverbindung **260** ⟶

Antennenanordnung **310**

Steuereinheit **300** ⟶

Nutzer-
Interface **320**

# Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2005265699 A
- CN 101604830 A
- DE 102005002278 A1
- US 2010103260 A1
- DE 102008053928 A1
- JP 11132962 A
- JP 2008247293 A
- US 20110090110 A1
- WO 2010007115 A